# EUROPEAN PATENT APPLICATION

(11) **EP 4 164 215 A1**
(43) Date of publication of application: **12.04.2023**
(21) Application number: 21816933.2
(22) Date of filing: 03.06.2021
(51) Int. Cl.: H04N 5/93

(54) **VIDEO PLAYBACK METHOD AND APPARATUS, AND ELECTRONIC DEVICE AND COMPUTER-READABLE STORAGE MEDIUM**

(30) Priority: 05.06.2020 CN 202010507551
(71) Applicant: Hangzhou Hikvision Digital Technology Co., Ltd., Hangzhou, Zhejiang 310051 (CN)
(72) Inventor: JIN, Wei, Hangzhou, Zhejiang 310051 (CN); YAO, Jiazhen, Hangzhou, Zhejiang 310051 (CN); ZHANG, Shuoshuo, Hangzhou, Zhejiang 310051 (CN); ZHANG, Lili, Hangzhou, Zhejiang 310051 (CN); ZHANG, Longtao, Hangzhou, Zhejiang 310051 (CN)
(74) Representative: Goddar, Heinz J.
(86) International application number: PCT/CN2021/098172
(87) International publication number: WO 2021/244615

(57) **Abstract**

The present disclosure provides a video playback method, a video playback apparatus, an electronic device and a computer-readable storage medium. In the present disclosure, in the case of the video playback to be performed, based on the target time point for the video playback to be performed and the target time zone corresponding to the target time point (the video playback mode is a mode for video playback based on a target time zone), a target playback time point for video playback is determined for a target video device to perform video playback, based on the target playback time point determined for the target video device, a video in the target video device is played back, such that the playback of the video in the target video device can be achieved.

## Description

### CROSS-REFERENCE TO RELATED APPLICATION

The present disclosure claims priority to Chinese Patent Application No. CN202010507551.2, filed on June 5, 2020, and entitled "VIDEO PLAYBACK METHOD AND APPARATUS, AND ELECTRONIC DEVICE AND COMPUTER-READABLE STORAGE MEDIUM", which is hereby incorporated herein by reference in its entirety.

### TECHNICAL FIELD

The present application relates to the technical field of video surveillance, and in particular to a video playback method, a video playback apparatus, an electronic device and a computer-readable storage medium.

### BACKGROUND

With the continuous development of society, the field of video surveillance is becoming more and more widely used. In the field of video surveillance, there is often a need for video playback.

Video playback allows to play back the recorded video stored in the video device at the target time point in the video window. However, the current video playback method does not consider the case of cross time zones, for example, the time zone corresponding to the target time point is different from the time zone in which the video device is located, in this case, the current video playback method cannot achieve playback of a video in the video device.

### SUMMARY

In view of this, the present disclosure provides a video playback method, a video playback apparatus, an electronic device, a computer-readable storage medium, and a computer program to achieve play back a video in the target video device.

According to a first aspect of the present disclosure, a video playback method is provided. The method is applied to a client, and includes: determining a target time point for video playback to be performed and a video playback mode, where the video playback mode is a mode for video playback based on a target time zone, and the target time zone is a time zone corresponding to the target time point; determining, based on the target time zone and the target time point, a target playback time point for video playback for a target video device to perform video playback; and playing back a video in the target video device based on the target playback time point determined for the target video device.

In an embodiment, the target time zone is a client time zone in which the client is located; when a number of the target video device to perform video playback is greater than 1, each target video device has a same target playback time point.

In an embodiment, the target time zone is a first time zone in which a designated video device is located; when a number of the target video device to perform video playback is greater than 1, a target playback time point of each target video device corresponds to same time information in a respective time zone in which each target video device is located.

In an embodiment, determining, based on the target time zone and the target time point, a target playback time point for video playback for a target video device to perform video playback includes: converting the target time point in the target time zone to a base time point in a preset base time zone based on a first time difference, where the first time difference is determined based on a time zone offset between the target time zone and the base time zone, or, when the target time point is in daylight saving time of the target time zone, the first time difference is based on a time zone offset between the target time zone and the base time zone, and a daylight saving time offset; and determining a target playback time point for video playback for the target video device based on the base time point.

In an embodiment, in response to determining that the target time zone is a first time zone in which a designated video device is located, converting the target time point in the target time zone to a base time point in a preset base time zone based on the first time difference includes: when the target time zone is different from a second time zone in which the target video device is located, determining a second time difference between the target time zone and the second time zone, where the second time difference is determined based on a time zone offset between the second time zone and the target time zone, or, when at least one of the target time point or a reference time point is in the daylight saving time, the second time difference is determined based on the daylight saving time offset and the time zone offset between the second time zone and the target time zone, and the reference time point is a time point within the second time zone corresponding to the target time point; and converting the target time point in the target time zone to the base time point in the preset base time zone based on the first time difference and the second time difference.

In an embodiment, the target time point is a time point selected on a plotted target timeline; the method further includes: displaying video information in the target video device corresponding to at least one time period in the target timeline.
the target time point is a time point selected on a plotted target timeline; the target timeline is plotted by: determining the target time zone corresponding to the target timeline; obtaining time zone information for the target time zone, where the time zone information includes at least one of information on a start time at which the target time zone enters daylight saving time, information on an end time at which the daylight saving time ends, or a daylight saving time offset; and plotting the target timeline corresponding to the target time zone, where when determining, based on the time zone information, that the target timeline includes a time point in the daylight saving time, the time point in the target timeline in the daylight saving time is adjusted to be a sum of the time point and the daylight saving time offset.

In an embodiment, the target time point is a time point selected on a plotted target timeline; the target timeline is plotted by: determining the target time zone corresponding to the target timeline; obtaining time zone information for the target time zone, where the time zone information includes at least one of information on a start time at which the target time zone enters daylight saving time, information on an end time at which the daylight saving time ends, or a daylight saving time offset; plotting a base timeline corresponding to a preset base time zone; and adjusting the base timeline to obtain the target timeline corresponding to the target time zone.

In an embodiment, when determining, based on the time zone information, that the target time zone is not in the daylight saving time, adjusting the base timeline to obtain the target timeline corresponding to the target time zone includes: adjusting the time point on the base timeline to obtain the target timeline corresponding to the target time zone based on a time zone offset between the target time zone and the preset base time zone.

In an embodiment, when determining, based on the time zone information, that the target time zone is in the daylight saving time, adjusting the base timeline to obtain the target timeline corresponding to the target time zone includes: for time points on the base timeline that are in the daylight saving time, adjusting the time points on the base timeline that are in the daylight saving time based on a time zone offset between the target time zone and the base time zone, and a daylight saving time offset; and for time points on the base timeline that are not in daylight saving time, adjusting the time points on the base timeline that are not in the daylight saving time based on the time zone offset between the target time zone and the base time zone.

In an embodiment, the method further includes: after adjusting the base timeline to obtain the target timeline corresponding to the target time zone, converting a video recording time of the target video device to time in the target time zone corresponding to the target timeline; and displaying video information in the target video device corresponding to at least one time period in the target timeline at a designated position in the target timeline.

According to a second aspect of the present disclosure, a video playback apparatus is provided, the apparatus is applied to a client, and includes: a first determination module, configured to determine a target time point for video playback to be performed and a video playback mode, where the video playback mode is a mode for video playback based on a target time zone, and the target time zone is a time zone corresponding to the target time point; a second determination module, configured to determine, based on the target time zone and the target time point, a target playback time point for video playback for a target video device to perform video playback; and a video playback module, configured to play back a video in the target video device based on the target playback time point determined for the target video device.

According to a third aspect of the present disclosure, an electronic device is provided, the electronic device includes a readable storage medium and a processor, where the readable storage medium is configured to store machine executable instructions, and the processor is configured to read the machine executable instructions stored in the readable storage medium, and execute the machine executable instructions to implement the video playback method according to the embodiments of the present disclosure.

According to a fourth aspect of the present disclosure, a computer-readable storage medium is provided, the computer-readable storage medium stores computer programs, where the computer programs are executed by a processor to implement the video playback method according to the embodiments of the present disclosure.

According to a fifth aspect of the present disclosure, A computer program stored on a computer-readable storage medium, when a processor executes the computer program, causing the processor to implement the video playback method according to the embodiments of the present disclosure.

As can be seen by the above technical solution, in the case of the video playback to be performed, based on the target time point for the video playback to be performed and the target time zone corresponding to the target time point (the video playback mode is a mode for video playback based on a target time zone), a target playback time point for video playback is determined for a target video device to perform video playback, based on the target playback time point determined for the target video device, a video in the target video device is played back, such that the playback of the video in the target video device can be achieved.

Further, in the embodiments, by determining, based on the target time zone and the target time point, a target playback time point for video playback for a target video device to perform video playback, when the time zone corresponding to the target time point is different from the time zone in which the target video device is located, the target playback time point for video playback for the target video device to perform video playback can be determined based on the target time zone and the target time point, such that playback of the video in the target video device is achieved when the time zone corresponding to the target time point is different from the time zone in which the target video device is located.

Further, when the number of the target video devices is greater than 1, even if each target video device is distributed in different time zones, synchronous playback of the videos in the multiple target video devices distributed in different time zones can be achieved according to the above-mentioned video playback method.

### BRIEF DESCRIPTION OF THE DRAWINGS

FIG. 1 is a diagram illustrating a system architecture according to an exemplary embodiment of the present disclosure.
FIG. 2 is a flowchart illustrating a video playback method according to an exemplary embodiment of the present disclosure.
FIG. 3 is a flowchart illustrating an implementation process of step 202 according to an exemplary embodiment of the present disclosure.
FIG. 4 is a flowchart illustrating an implementation process of plotting a target timeline according to an exemplary embodiment of the present disclosure.
FIG. 5 illustrates an example of a target timeline according to an exemplary embodiment of the present disclosure.
FIG. 6 illustrates an example of displaying video information based on a target timeline according to an exemplary embodiment of the present disclosure.
FIG. 7 is a block diagram illustrating a video playback apparatus according to an exemplary embodiment of the present disclosure.
FIG. 8 is a block diagram illustrating a video playback apparatus according to another exemplary embodiment of the present disclosure.
FIG. 9 is a diagram illustrating a hardware structure of an electronic device according to an exemplary embodiment of the present disclosure.

### DETAILED DESCRIPTION OF THE EMBODIMENTS

Examples will be described in detail herein with the examples thereof expressed in the drawings. Where the following description relates to the drawings, unless otherwise indicated, the same numerals in different drawings represent the same or similar elements. The embodiments described in the following exemplary embodiments do not represent all embodiments consistent with the present disclosure. Rather, they are merely examples of apparatuses and methods consistent with some aspects of the present disclosure as detailed in the appended claims.

The terminology used herein is for the purpose of describing particular embodiments only and is not intended to be limiting of the present disclosure. As used herein, the singular forms "a", "the" and "the" are intended to include the plural forms as well, unless the context clearly indicates otherwise. It should also be understood that the term "and/or" as used herein is and includes any and all possible combinations of one or more of the associated listed items.

It will be understood that while terms such as "first", "second", "third", etc. may be used to describe to describe various information, such information should not be limited to these terms. These terms are used only to distinguish the same type of information from each other. For example, without departing from the scope of the present disclosure, a first information may also be referred to as a second information, and similarly, a second information may also be referred to as a first information. Depending on the context, as used herein, the wording "if' may be interpreted as "while ..." or "when ..." or "in response to a determination".

In order to understand the present disclosure more easily, firstly, the system architecture involved in the present disclosure is illustrated.

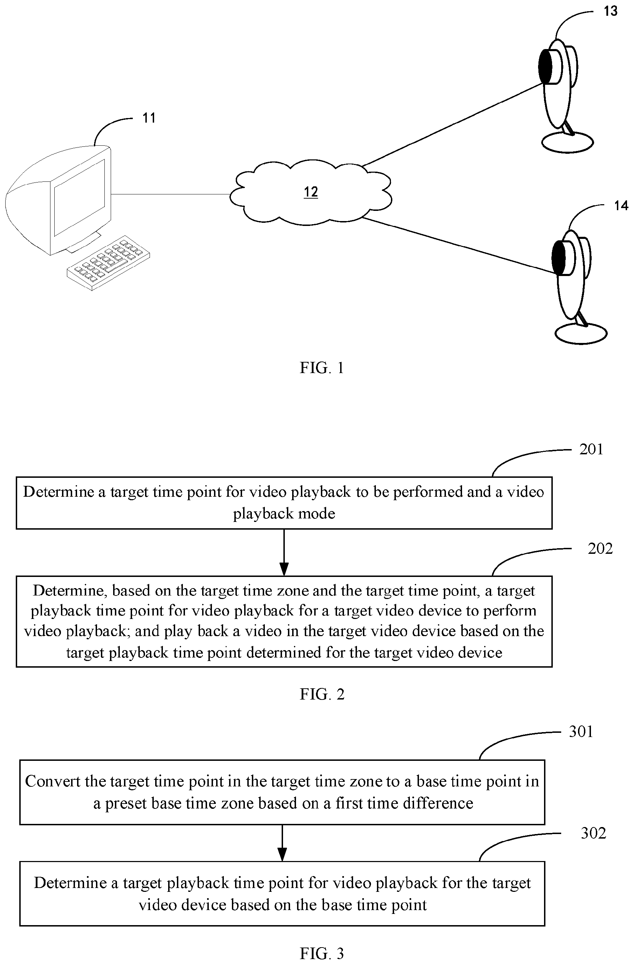

FIG. 1 is a diagram illustrating a system architecture according to an exemplary embodiment of the present disclosure. As shown in FIG. 1, the system architecture may include a client 11, a link 12, a video device 13, and a video device 14. FIG. 1 illustrates an example of one link and two video devices, and embodiments of the present disclosure may have any number of link and video device in FIG. 1 according to actual needs, which is not limited by this embodiment.

In FIG. 1, the client 11 is coupled to the video device 13 and the video device 14 via the link 12. The link 12 may include a wireless link, a wired link or a fiber optic cable, etc. herein, which is not limited by the present disclosure.

In FIG. 1, as an embodiment, the client 11 may be integrated in a designated device. Here, the designated device is, for example, a smartphone, a tablet computer, a laptop computer, a desktop computer, a server, etc. As another embodiment, the client 11 may also be a standalone device, and this embodiment is not specifically limited.

In FIG. 1, the video device 13 and the video device 14 may each be a device for storing videos. As an embodiment, the device for storing videos herein can be a camera device with a video recording function and a video storage function, such as a gun camera, a dome camera, or a fisheye camera, etc. As another embodiment, the device for storing videos herein can also be a device with the video storage function and without the video recording function, such as a network hard disk and other storage mediums. Optionally, when the device for storing videos does not have the video recording function, the device may be coupled to a device with the video recording function, such as a gun camera, a dome camera, or a fisheye camera, etc., to obtain a video and store it locally.

The above completes the relevant description of the system architecture shown in FIG. 1.

Based on the system architecture shown in FIG. 1, the video playback method shown in FIG. 2 is described below.

FIG. 2 is a flowchart illustrating the video playback method according to an exemplary embodiment of the present disclosure. As shown in FIG. 2, in an example, the method may be applied to the client 11 described above.

As shown in FIG. 2, the process of the method may include the following steps.

At step 201, a target time point for video playback to be performed and a video playback mode are determined.

As an embodiment, the video playback mode may be set by the user according to actual business needs. In an example, the video playback mode herein is a mode for video playback based on a target time zone, and the target time zone is a time zone corresponding to the target time point. The target time point indicates time when the user wants to perform video playback according to the actual business needs. For example, the time when the user wants to perform video playback according to the actual business needs is 9:00 PM in the eastern 8th zone (UTC+8:00), i.e., the target time point is 9:00 in the eastern 8th zone (UTC+8:00), and in this case, the target time zone is the eastern 8th zone.

In an example, the target time zone may be a time zone in which the client 11 is located (hereinafter referred to as a client time zone), in this case, the above video playback mode may be a mode for video playback based on the client time zone.

In another example, the target time zone may be a time zone (hereinafter referred to as a first time zone) in which the video device (hereinafter referred to as a designated video device) designated in the above system architecture shown in FIG. 1 is located. As an embodiment, the designated video device herein may be a video device selected by the user based on actual needs. When the target time zone is the first time zone, the video playback mode may be a mode for video playback based on the first time zone. It will be noted that the designated video device can subsequently be switched according to the actual business needs.

At step 202, based on the target time zone and the target time point, a target playback time point for video playback for a target video device to perform video playback is determined; and a video in the target video device is played back based on the target playback time point determined for the target video device.

As an embodiment, playing back the video in the target video device based on the target playback time point determined for the target video device includes: sending the target playback time point determined for each target video device to each target video device separately, so that each target video device retrieves the corresponding video from all the stored videos based on the received target playback time point and sends the video to the client 11 to achieve simultaneous playback of the video in each target video device via the client 11.

In an embodiment, when the video playback mode is a mode for video playback according to the client time zone, if a number of the target video devices to perform video playback is greater than 1, each target video device has the same target playback time point to achieve synchronous playback of the monitoring screen of each target video device at the same time in the client. The target playback time point herein may specifically be a base time point easily identified by each target video device, which is described in an embodiment 1 below.

In another embodiment, when the video playback mode is a mode for video playback according to the first time zone, if a number of the target video devices to perform video playback is greater than 1, the target playback time point of each target video device corresponds to same time information in a respective time zone in which each target video device is located, to achieve synchronous playback of the monitoring screen of each target video device in which the local time of each target video device is the same time, which is described in an embodiment 2 below. For example, if a number of the target video devices to perform video playback is greater than 1 and these target video devices are in different time zones, these target video devices have different target playback time points, but the target playback time point of each target video devices corresponds to the same time information in the respective time zone in which each target video device is located. For example, when the video playback mode is a mode for video playback according to the first time zone, if a number of the target video devices to perform video playback is greater than 1and these target video devices are in the same time zone, the target playback time point of each target video device is the same and the target playback time point of each target video device corresponds to the same time information in the respective time zone in which each target video device is located.

The above completes the process shown in FIG. 2.

As can be seen through the process shown in FIG. 2, in the case of the video playback to be performed, based on the target time point for the video playback to be performed and the target time zone corresponding to the target time point (the video playback mode is a mode for video playback based on a target time zone), a target playback time point for video playback is determined for a target video device to perform video playback; and then based on the target playback time point determined for each target video device, a video in each target video device is played back, such that the playback of the video in each target video device can be achieved.

Further, in the embodiments, based on the target time zone and the target time point, a target playback time point for video playback for a target video device to perform video playback is determined, rather than blindly adopting the target time point directly as the target playback time point determined for the target video device to perform video playback, such that even when the time zone corresponding to the target time point is different from the time zone in which the target video device is located, the target playback time point for video playback for the target video device to perform video playback can be determined based on the target time zone and the target time point. In this way, playback of the video in the target video device is achieved when the time zone corresponding to the target time point is different from the time zone in which the target video device is located.

Further, when a number of the target video devices is greater than 1, even if the plurality of target video devices are distributed in the different time zones, according to the above video playback method, simultaneous playback of the videos in the plurality of target video devices distributed in different time zones can be achieved.

How to determine the target playback time point for video playback for the target video device to perform video playback based on the target time zone and the target time point in step 202 will be described below.

FIG. 3 is a flowchart illustrating an implementation process of step 202 according to an exemplary embodiment of the present disclosure. As shown in FIG. 3, the process may include the following steps 301 to 302.

At step 301, the target time point in the target time zone is converted to a base time point in a preset base time zone based on a first time difference.

In an example, when the target time point is not in daylight saving time of the target time zone, the first time difference may be determined based on a time zone offset between the target time zone and the base time zone, for example, the first time difference may be a time zone offset between the target time zone and the base time zone. As an embodiment, the base time zone may be the zero-time zone (also referred to as UTC time zone). For example, the base time zone is the zero-time zone (also referred to as UTC +0) and the target time zone is the eastern 8th zone (UTC+8:00), the first time difference is 8-0 = 8 hours.

In another example, when the target time point is in the daylight saving time of the target time zone, the first time difference may be determined based on the time zone offset between the target time zone and the base time zone, and a daylight saving time offset. For example, the first time difference is a result of the time zone offset between the target time zone and the base time zone plus the daylight saving time offset. As an embodiment, the base time zone may be the zero-time zone (also called UTC time zone). For example, the base time zone is the zero-time zone (also called UTC +0), and the target time zone is the eastern 8th zone (UTC+8:00), and the daylight saving time offset is 1 hour, the first time difference is 8+1=9 hours.

Based on the first time difference, the target time point in the target time zone can be converted to the base time point in the preset base time zone, which will be described in the embodiment 1 and the embodiment 2 below, and details are not described herein again.

At step 302, a target playback time point for video playback for the target video device is determined based on the base time point.

In an example, any video device records video recording time with a base time in the base time zone, based on this, in step 302, determining the target playback time point for video playback for the target video device based on the base time point may include: directly determining the base time point as a target playback time point for video playback for the target video device. Thus, when the base time point determined for the target video device is sent to the target video device as the target playback time point for the target video device, based on the received target playback time point, the target video device directly retrieves the corresponding video from all the videos that have been stored and sends the video to the client 11, to achieve simultaneous playback of the video in each target video device via the client 11.

It will be noted that the above is only an example of determining the target playback time point and is not intended to limit the present disclosure. In this embodiment, the target playback time point can also be determined based on the base time point by other ways, for example, a result obtained by adding a specified time point on the basis of the base time point is determined as the target playback time point, and so on, and this embodiment is not illustrated any more.

The above completes the process shown in FIG. 3.

With the process shown in FIG. 3, the target playback time point for video playback can be determined for the target video device to perform video playback based on the target time zone and the target time point.

In some embodiments, determining, based on the target time zone and the target time point, the target playback time point for video playback for a target video device to perform video playback may include: determining whether the target time point is in the daylight saving time of the target time zone; in response to determining that the target time point is not in the daylight saving time of the target time zone, determining a first time difference based on a time zone offset between the target time zone and the preset base time zone; in response to determining that the target time point is in the daylight saving time of the target time zone, determining the first time difference based on the time zone offset between the target time zone and the base time zone, and a daylight saving time offset; converting the target time point in the target time zone to a base time point in the base time zone based on the first time difference; and determining the target playback time point for video playback for the target video device based on the base time point.

In some embodiments, if the target time zone is a first time zone in which the designated video device is located, converting the target time point in the target time zone to a base time point in the base time zone based on the first time difference includes: when the target time zone is different from a second time zone in which the target video device is located, determining whether a reference time point is in the daylight saving time, where the reference time point is a time point in the second time zone corresponding to the target time point; in response to determining that neither the target time point nor the reference time point is in the daylight saving time, determining a second time difference between the target time zone and the second time zone based on the time zone offset between the second time zone and the target time zone; in response to determining that at least one of the target time point or the reference time point is in the daylight saving time, determining the second time difference between the target time zone and the second time zone based on the daylight saving time offset and the time zone offset between the second time zone and the target time zone; and converting the target time point in the target time zone to the base time point in the preset base time zone based on the first time difference and the second time difference.

The process shown in FIG. 3 will be described below by two embodiments.

### Embodiment 1:

This embodiment 1 is applied to a scenario where the target time zone is the client time zone as described above, and the video playback mode is a mode for video playback based on the client time zone. In this application scenario, when the number of target video devices to perform video playback is greater than 1, for each target video device, regardless of whether the target video devices are in the same time zone, when the target time point in the target time zone is converted to the base time point in the preset base time zone according to step 301, the time zone in which the target video device is located is not considered, and only the above-mentioned first time difference is considered. On this premise, in combination with the above-mentioned step 302: determining a target playback time point for video playback for the target video device based on the base time point (e.g., determining the base time point as a target playback time point for video playback for the target video device), finally, by the mode of video playback based on the client time zone, a target time point for video playback for each target video device to perform video playback is same. The embodiments will be described below.

In this embodiment 1, step 301 may include step 3011: subtracting the first time difference from the target time point to obtain the base time point.

The embodiment 1 will be illustrated below in connection with step 3011.

For example, the client time zone is the eastern 8th zone (UTC+8:00), the target time point is 9:00 in the eastern 8th zone (UTC+8:00), not in daylight saving time of the eastern 8th zone, and the base time zone is the zero-time zone (also referred to as UTC +0). The target video devices include the video device 13 and the video device 14, the video device 13 is in the eastern 9th zone (UTC+9:00), and the video device 14 is in the eastern 10th zone (UTC+10:00).

For the video device 13 in the eastern 9th zone (UTC+9:00), based on the description of the first time difference, the first time difference herein can be, for example, the time zone offset (8-0=8 hours) between the target time zone, i.e., the eastern 8th zone (UTC+8:00), and the base time zone, i.e., the zero-time zone (UTC +0). Based on the first time difference, the target time point in the target time zone, i.e., the eastern 8th zone (UTC +8:00), is converted to the base time point in the zero-time zone (UTC +0). In an example, the target time point, i.e., 9:00 in the eastern 8th zone (UTC +8:00), can subtract the first time difference (8 hours) to obtain the base time point (i.e., 1:00) corresponding to the video device 13. Combined with the description of step 302, the base time point (i.e., 1:00) can be determined as the target playback time point for video playback of the video device 13. It will be noted that the implementation of the first time difference, and determining the base time point based on the first time difference is only an example (similar to the following, not to be explained below), is not used to limit the present disclosure. This embodiment can also use other ways to calculate the first time difference, and determine the base time point based on the calculated first time difference , for example, the first time difference can also be the time zone offset (-8) of the base time zone relative to the target time zone, based on this first time difference (-8), the target time point, i.e., 9:00 in the eastern 8th zone (UTC+8:00), can be added to the first time difference (-8) to obtain the base time point (i.e., 1:00) corresponding to the video device 13. This embodiment is not described with examples one by one again.

For the video device 14 in the eastern 10th zone (UTC+10:00), in a similar manner to determine the target playback time point of the video device 13, the base time point (i.e., 1:00) is ultimately determined as the target playback time point of the video device 14 for video playback.

In this embodiment 1, in the mode for video playback according to the client time zone, the target playback time point for video playback for each target video device, such as the video device 13 and the video device 14, is the same. It will be noted that in this embodiment 1, for the video device 13 in the eastern 9th zone (UTC+9:00), the target playback time point is 1:00 (for example, not in the daylight saving time of the eastern 9th zone), and corresponds to 10:00 in the eastern 9th zone (UTC+9:00) (the sum of the target playback time point (i.e., 1:00) and the time zone offset (9 hours) between the eastern 9th zone and the base time zone). For the video device14 in the eastern 10th zone (UTC+10:00), the target playback time point is 1:00 (for example, not in the daylight saving time of the eastern 10th zone), and corresponds to 11:00 in the eastern 10th zone (UTC+10:00) (the sum of the target playback time point (i.e., 1:00) and the time zone offset (10 hours) between the eastern 10th zone and the base time zone). That is, when the target time point is 9:00 of the client time zone, i.e., the eastern 8th zone (UTC+8:00), synchronous playback of the videos of the video device 13 and the video device 14 at the same time of the client, i.e., 9:00 of the eastern 8th zone (UTC+8:00), is achieved.

The above is described as an example where the target time point is not in the daylight saving time, and the following is described as an example where the target time point is in the daylight saving time.

For example, the client time zone is the eastern 8th zone (UTC+8:00), the target time point is 9:00 in the eastern 8th zone (UTC+8:00), and in the daylight saving time in the eastern 8th zone, the daylight saving time offset is 1 hour, the base time zone is the zero-time zone (UTC +0), the target video devices include the video device 13 and the video device 14, the video device 13 is in the eastern 9th zone (UTC +9:00), and the video device 14 is in the eastern 10th zone (UTC +10:00).

For the video device 13 in the eastern 9th zone (UTC+9:00), based on the description of the first time difference, the first time difference can be, for example, a result (9 hours) of the time zone offset (8-0=8 hours) between the eastern 8th zone (UTC+8:00) and the base time zone, i.e., the zero-time zone (UTC +0) plus the daylight saving time offset (1 hour). Based on the first time difference, the target time point in the target time zone, i.e., the eastern 8th zone (UTC +8:00), is converted to the base time point in the zero-time zone (UTC +0). In an example, the target time point, i.e., 9:00 in the eastern 8th zone (UTC +8:00), can subtract the first time difference (9 hours) to obtain the base time point (i.e., 0:00) corresponding to the video device 13. Combined with the description for video playback of step 302, the base time point (i.e., 0:00) can be determined as the target playback time point for video playback of the video device 13.

For the video device 14 in the eastern 10th zone (UTC+10:00), in a similar manner to determine the target playback time point of the video device 13, the base time point (i.e., 0:00) is ultimately determined as the target playback time point for video playback of the video device 14.

In this embodiment 1, in the mode for video playback according to the client time zone, the target playback time point for video playback for each target video device, such as the video device 13 and the video device 14, is the same. It will be noted that in this embodiment 1, for the video device 13 in the eastern 9th zone (UTC+9:00), the target playback time point is 0:00 (for example, in the daylight saving time of the eastern 9th zone), and corresponds to 10:00 in the eastern 9th zone (UTC+9:00) (the sum of the target playback time point (i.e., 0:00), the time zone offset (9 hours) between the eastern 9th zone and the base time zone, and the daylight saving time offset (i.e., 1 hour)). For the video device14 in the eastern 10th zone (UTC+10:00), the target playback time point is 0:00 (for example, in the daylight saving time of the eastern 10th zone), and corresponds to 11:00 in the eastern 10th zone (UTC+10:00) (the sum of the target playback time point (i.e., 0:00) and the time zone offset (10 hours) between the eastern 10th zone and the base time zone, and the daylight saving time offset (i.e., 1 hour)). That is, when the target time point is 9:00 of the client time zone, i.e., the eastern 8th zone (UTC+8:00), synchronous playback of the videos of the video device 13 and the video device 14 at the same time of the client, i.e., 9:00 of the eastern 8th zone (UTC+8:00), is achieved.

The above describes the examples in this embodiment 1. The examples are provided only for the purpose of understanding the solution and are not intended to limit the present disclosure.

The above describes the embodiment 1, and the embodiment 2 will be described below.

### Embodiment 2:

This embodiment 2 is applied to a scenario in which the target time zone is the first time zone, and the video playback mode is a mode for video playback based on the first time zone. In this application scenario, if a number of the target video devices to perform video playback is greater than 1 and these target video devices are in different time zones, the target playback time points of theses target video devices are different, but the target playback time points of these target video devices correspond to the same time information in the respective time zone in which each target video device is located, which will be described in the following embodiments and will not be analyzed here.

In this embodiment 2, as an example, step 301 may include steps 3012 to 3015.

At step 3012, when the target time zone is different from the second time zone in which the target video device is located, step 3013 is performed, and when the target time zone is the same as the second time zone in which the target video device is located, step 3015 is performed.

The embodiment 2 only describes how to convert the target time point in the target time zone to a base time point in a preset base time zone based on the first time difference with steps 3012 to 3015 as the example, and is not intended to limit the present disclosure. In this embodiment 2, the target time point in the target time zone can be converted to a base time point in the preset base time zone based on the first time difference in other ways, such as directly performing steps 3013 to 3014 below; or, when performing step 3012, if the target time zone is the same as the second time zone in which the target video device is located, step 3015 may not be performed, but step 3013 to step 3014 are directly performed, and the details are not redundantly described in this embodiment 2.

At step 3013, a second time difference between the target time zone and the second time zone is determined. Step 3014 is performed thereafter.

In an example, a new parameter (i.e., a reference time point) may be introduced to facilitate the determination of the second time difference in step 3013. The reference time point is a time point determined within the second time zone that corresponds to the target time point. The reference time point and the target time point correspond to the same base time in the base time zone. For example, the target time point is 8:00 in the eastern 8th zone (UTC+8:00) (for example, UTC as the base time zone, and the corresponding base time is 0:00), and the second time zone is the eastern 9th zone (UTC+9:00), the reference time point can be a time point in the eastern 9th zone (UTC+9:00) that indicates the same base time (0:00) with 8:00 in the eastern 8th zone (UTC+8:00). For example, the reference time point is 9:00 in the eastern 9th zone (UTC+9:00).

Based on the above description, in an example, when the target time point is not in the daylight saving time in the target time zone and the reference time point is not in the daylight saving time in the second time zone, the second time difference may be determined based on the time zone offset between the second time zone and the target time zone. For example, the second time difference may be the time zone offset between the above-mentioned second time zone and the target time zone. For example, if the target time zone is the eastern 9th zone (UTC+9:00) and the second time zone is the eastern 10th zone (UTC+10:00), the above second time difference is 10-9 = 1 hour.

In an example, when at least one of the reference time point or the target time point is in the daylight saving time, the second time difference is determined based on the corresponding daylight saving time offset and the time zone offset between the second time zone and the target time zone.

In an example, when the target time point is in the daylight saving time in the target time zone and the reference time point is not in the daylight saving time in the second time zone, the second time difference may be determined based on the time zone offset between the second time zone and the target time zone and the corresponding daylight saving time offset in the target time zone. For example, the second time difference may be a difference which is obtained by subtracting the daylight saving time offset from the time zone offset between the second time zone and the target time zone. For example, if the target time zone is the eastern 9th zone (UTC+9:00), the corresponding daylight saving time offset of the target time zone is 1 hour, and the second time zone is the eastern 10th zone (UTC+10:00), the second time difference is 10-9-1=0 hour.

In another example, when the target time point is not in daylight saving time of the target time zone and the reference time point is in daylight saving time of the second time zone, the second time difference may be determined based on the time zone offset between the second time zone and the target time zone, and the daylight saving time offset corresponding to the second time zone. For example, the second time difference may be a difference which is obtained by adding the time zone offset between the second time zone and the target time zone and the daylight saving time offset corresponding to the second time zone. For example, if the target time zone is the eastern 9th zone (UTC+9:00), the second time zone is the eastern 10th zone (UTC+10:00), and the daylight saving time offset corresponding to the second time zone is 1 hour, the second time difference is 10-9+1=2 hours.

In another example, when the target time point is in daylight saving time of the target time zone and the reference time point is in daylight saving time of the second time zone, the second time difference may be determined based on the time zone offset between the second time zone and the target time zone, the daylight saving time offset corresponding to the target time zone, and the daylight saving time offset corresponding to the second time zone. For example, the second time difference may be a difference which is obtained by adding the time zone offset between the second time zone and the target time zone and the daylight saving time offset corresponding to the second time zone, and then subtracting the daylight saving time offset corresponding to the target time zone. For example, if the target time zone is the eastern 9th zone (UTC+9:00), the second time zone is the eastern 10th zone (UTC+10:00), the daylight saving time offset corresponding to the second time zone is 1 hour, and the daylight saving time offset corresponding to the target time zone is 1 hour, the second time difference is 10-9+1-1=1 hour.

The calculation of the second time difference is described above.

At step 3014: the target time point in the target time zone is converted to a base time point in the base time zone based on the first time difference and the second time difference.

As an embodiment, this step 3014 may include: subtracting the first time difference and the second time difference from the target time point to obtain the base time point. It will be noted that this is only an embodiment of converting the target time point in the target time zone to the base time point in the base time zone based on the first time difference and the second time difference, and this embodiment is not specifically limited, and this embodiment may also be implemented in other ways, for example: a subtrahend and a minuend in determining the first time difference are interchanged, a subtrahend and a minuend in determining the second time difference are interchanged, and the base time point is obtain by adding the target time point, a result obtained by interchanging a subtrahend and a minuend in determining the first time difference and a result obtained by interchanging a subtrahend and a minuend in determining the second time difference. This embodiment will not be described by examples.

At step 3015, the target time point in the target time zone is converted to the base time point in the preset base time zone based on the first time difference.

This step 3015 is performed with the target time zone being the same as the second time zone in which the target video device is located. This step 3015 is similar to the manner in which the base time point is determined in the embodiment 1 and is not repeated herein.

The base time point for each of the different target video devices is determined by steps 3012 to 3015. Based on the description of steps 3012 to 3015, the base time points corresponding to the target video devices in different time zones are different. In this context, in combination with the description of step 302, in the mode for video playback of the video based on the first time zone, the target playback time points for video playback determined for various target video devices to perform video playback are different.

For example, the designated video device is a video device 15 not shown in FIG. 1, the video device 15 is in the eastern 8th zone (UTC+8:00), i.e., the target time zone is the eastern 8th zone (UTC+8:00), the target time point is 10:00 a.m. the eastern 8th zone (UTC+8:00). The target video devices include the video device 13 and the video device 14, the video device 13 is in the eastern 9th zone (UTC+9:00), and the video device 14 is in the eastern 10th zone (UTC+10:00).

For the video device 13 in the eastern 9th zone (UTC+9:00), the eastern 9th zone (UTC+9:00) in which the video device 13 is located is different from the target time zone, i.e., the eastern 8th zone (UTC+8:00), based on the description of step 3013, for example, the target time point, i.e. 10:00 in the eastern 8th zone (UTC+8:00) is not in daylight saving time of the target time zone, the reference time point in the eastern 9th zone (UTC+9:00) corresponding to the target time point is also not in daylight saving time of the second time zone, the second time difference is a time zone offset (9-8=1 hour) between the eastern 9th zone (UTC+9:00) and the target time zone, i.e., the eastern 8th zone (UTC+8:00). Based on the description of the first time difference in the embodiment 1, for example, the first time difference is a time zone offset (8-0=8 hours) between the target time zone, i.e., the eastern 8th zone (UTC+8:00), and the base time zone. Based on the description of step 3014, a result obtained by subtracting the first time difference and the second time difference from the target time point, i.e., 10:00 in the eastern 8th zone (UTC+8:00), can be determined as the base time point corresponding to the video device 13 (specifically, 10-8-1=1:00). Further, combined with step 302, the base time point (i.e., 1:00) corresponding to the video device 13 may be determined as the target playback time point for video playback of the video device 13. It will be understood that, referring to the conversion method similar to the base time point and the target time point in the embodiment 1, without considering daylight saving time, the target playback time point of the video device 13 (i.e., the base time point (1:00) corresponding to the video device 13) can correspond to 10:00 in the time zone (i.e., the eastern 9th zone (UTC+9:00)) where the video device 13 is located.

For the video device 14 in the eastern 10th zone (UTC+10:00), the eastern 10th zone (UTC+10:00) in which the video device 14 is located is different from the target time zone, i.e., the eastern 8th zone (UTC+8:00), based on the description of step 3013, for example, the target time point, i.e. 10:00 in the eastern 8th zone (UTC+8:00) is not in daylight saving time of the target time zone, the reference time point in the eastern 10th zone (UTC+10:00) corresponding to the target time point is also not in daylight saving time of the second time zone, the second time difference is a time zone offset (10-8=2 hours) between the eastern 10th zone (UTC+10:00) and the target time zone, i.e., the eastern 8th zone (UTC+8:00). Based on the description of the first time difference in the embodiment 1, for example, the first time difference is a time zone offset (8-0=8 hours) between the target time zone, i.e., the eastern 8th zone (UTC+8:00), and the base time zone. Based on the description of step 3014, a result obtained by subtracting the first time difference and the second time difference from the target time point, i.e., 10:00 in the eastern 8th zone (UTC+8:00), can be determined as the base time point corresponding to the video device 14 (specifically, 10-8-2=0:00). Further, combined with step 302, the base time point (i.e., 0:00) corresponding to the video device 14 may be determined as the target playback time point for video playback of the video device 14. It will be understood that, referring to the conversion method similar to the base time point and the target time point in the embodiment 1, without considering daylight saving time, the target playback time point of the video device 14 (i.e., the base time point (0:00) corresponding to the video device 14) can correspond to 10:00 in the time zone (i.e., the eastern 10th zone (UTC+10:00)) where the video device 14 is located.

As can be seen from the above description, the target playback time point of the video device 13 (i.e., the base time point (1:00) corresponding to the video device 13) is different from the target playback time point of the video device 14 (i.e., the base time point (0:00) corresponding to video device 14). However, based on the fact that the target playback time point of the video device 13 (i.e., the base time point (1:00) corresponding to the video device 13) corresponds to a time point of 10:00 in the eastern 9th zone in which the video device 13 is located, the target playback time point of the video device 14 (i.e., the base time point (0:00) corresponding to the video device 14) corresponds to a time point of 10:00 in the eastern 10th zone in which the video device 14 is located, in mode for video playback based on the first time zone, although the corresponding target playback time points determined for the target video devices in different time zones are different, the time information corresponding to the target playback time point of each target video device in the respective time zone of each target video device is the same. The monitoring screen of each target video device for the same local time (synchronous playback start time are local 10:00) is synchronously playback.

The above is performed under the premise that the target time point and the reference time point of the second time zone corresponding to the target time point are not in daylight saving time. If the target time point and/or the reference time point of the second time zone corresponding to the target time point is in daylight saving time, the first time difference and the second time difference can be determined as described above, and finally, in the mode of video playback based on the first time zone, although the corresponding target playback time points of the target video devices in different time zones are different, the time information corresponding to the target playback time point of each target video device in the respective time zone of each target video device is the same. This embodiment will not be described by examples.

The above describes the embodiment 2.

In addition, for alarm linkage playback and instant playback, the target time zone is a client time zone in which the client is located. For example, the alarm linkage system includes a client 1, an alarm device 2, a video device 3 and a video device 4, when an alarm event occurs, the video device 3 and the video device 4 associated with the alarm device 2 can be triggered for video playback. In an embodiment, the client time zone in which client 1 is located is the eastern 8th zone (UTC+8:00), the target time point at the time of the alarm event is 9:00 in the eastern 8th zone (UTC+8:00) and is not in the daylight saving time in the eastern 8th zone, the base time zone is the zero-time zone (UTC +0), the target video devices include the video device 3 and the video device 4, the video device 3 is in the eastern 9th zone (UTC+ 9:00), and the video device 4 is in the eastern 10th zone (UTC +10:00).

For the video device 3 in the eastern 9th zone (UTC+ 9:00), the first time difference can be the time zone offset (8-0 = 8 hours) between the target time zone, i.e., the eastern 8th zone (UTC+ 8:00), and the base time zone, i.e., the zero-time zone (UTC +0). Based on the first time difference, the target time point in the target time zone, i.e., the eastern 8th zone (UTC +8:00), is converted to the base time point in zero-time zone (UTC +0). In an example, the base time point (i.e., 1:00) corresponding to the video device 3 is obtained by subtracting the first time difference (8 hours) from the target time point, i.e., 9:00 of the eastern 8th zone (UTC+8:00). The base time point (i.e., 1:00) can be determined as the target playback time point for video playback of the video device 3. In other words, the target playback time point for video playback of the video device 3 is 10:00 in the time zone in which the video device 3 is located.

For the video device 4 in the eastern 10th zone (UTC+10:00), the base time point (1:00) is determined as the target playback time point for video playback of the video device 4 in a similar way to determine the target playback time point of the video device 3. In other words, the target playback time point for video playback of the video device 4 is 11:00 in the time zone where the video recording device 4 is located.

For the case where the target time point is in daylight saving time when the alarm event occurs, the relevant description may refer to the embodiment 1, which will not be repeated here. For the instant playback, the relevant description may refer to the alarm linkage playback.

It will be noted that, as an embodiment, the target time point may be an external input time point.

As another embodiment, the target time point may also be a time point that is selected on the plotted target timeline. Optionally, the user may select the target time point by clicking on a time point on the target timeline. Optionally, if there is a slide marker on the target timeline, the user can select the time point pointed by the slide marker as the target time point by moving the slide marker on the target timeline, without any specific limitation in this embodiment.

Plotting the target timeline is described below.

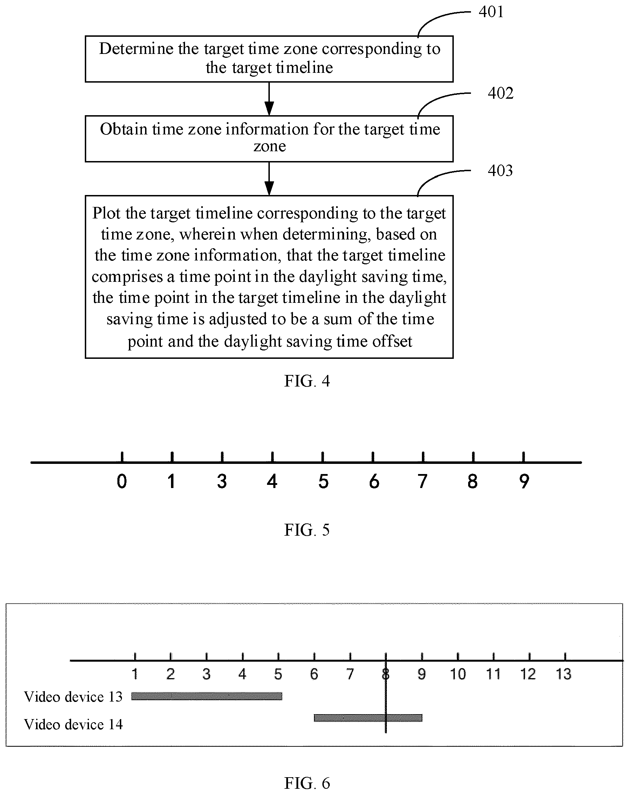

FIG. 4 is a flowchart illustrating an implementation of plotting a target timeline according to an exemplary embodiment of the present disclosure. As shown in FIG. 4, the process includes the following steps.

At step 401, the target time zone corresponding to the target timeline is determined.

As an embodiment, the target time zone corresponding to the target timeline can be determined based on the video playback mode. Optionally, in the mode for video playback based on the client time zone, the target time zone corresponding to the target timeline is the client time zone. In the mode for video playback the video based on the first time zone in which the designated video device is located, the target time zone corresponding to the target timeline is the first time zone.

At step 402, time zone information for the target time zone is obtained.

As an optional implementation, the time zone information of the target time zone can be obtained from the time zone information of each time zone that has been stored locally. As another optional implementation, the time zone information of the target time zone can be obtained from external sources. The present disclosure is not specifically limited by the embodiment.

Optionally, the time zone information herein may include: start time information ***t*ₑₙₜₑᵣ** for entering daylight saving time in the target time zone and/or end time information ***t*_{end}** for the end of daylight saving time, and a daylight saving time offset.

At step 403, the target timeline corresponding to the target time zone is plotted, where, in response to determining that the target timeline includes a time point in daylight saving time based on the time zone information, the time point at daylight saving time in the target timeline is adjusted to be a sum of the time point and the daylight saving time offset.

As an embodiment, in step 403, based on the description of the time zone information (the time zone information includes: the start time information ***t*ₑₙₜₑᵣ** for entering daylight saving time in the target time zone and/or end the time information ***t*_{end}** for the end of daylight saving time), the time point on the target timeline that is in daylight saving time can be determined based on the time zone information. For the time point on the target timeline that is in daylight saving time, the time point in the target timeline that is in daylight saving time can be adjusted to the sum of the time point and the daylight saving time offset. For example, the daylight saving time offset is 1 hour, if the target timeline enters daylight saving time from a point 2 as shown in FIG. 5, the point 2 on the target timeline is set to a point 3, and the other points on the target timeline that are in daylight saving time are set in turn as shown in FIG. 5.

As another embodiment, in step 403, or before step 403, the process of plotting the target timeline may further include: plotting a base timeline corresponding to a preset base time zone. For example, after the time zone information of the target time zone is obtained, the base timeline corresponding to the preset base time zone is plotted, and the base timeline is adjusted to obtain the target timeline corresponding to the target time zone. The following section describes how to adjust the base timeline to obtain the target timeline.

In an example, in response to determining that the target time zone is not in daylight saving time based on the time zone information obtained in step 402, a time point on the base timeline may be adjusted based on the time zone offset between the target time zone and the base time zone, and the timeline obtained after adjusting the base timeline is the target timeline. Optionally, for any time point on the base timeline, the time point can be adjusted according to the following formula 1: t = t₁ + t₂ (formula 1). In the formula 1, t represents the adjusted time point, t₁ represents the unadjusted time point on the base timeline, and t₂ represents the time zone offset. For example, the time zone offset between the target time zone and the base time zone is 8 hours, according to the formula 1, 0:00 on the base timeline can be adjusted to 8:00, 1:00 can be adjusted to 9:00, 2:00 can be adjusted to 10:00, and so on, to obtain the target timeline corresponding to the target time zone.

In an example, in response to determining that the target time zone is in daylight saving time based on the time zone information obtained in step 402, for a time point on the base timeline that is in daylight saving time, the time point on the base timeline in daylight saving time may be adjusted based on the time zone offset between the target time zone and the base time zone, and the daylight saving time offset. For a time point on the base timeline that is not in daylight saving time, the time point on the base timeline that is not in daylight saving time can be adjusted according to the time zone offset between the target time zone and the base time zone, and the timeline obtained after adjusting the base timeline is the target timeline.

Optionally, as an embodiment, for a time point on the base timeline that is in daylight saving time, the a time point on the base timeline can be adjusted according to the following formula 2: t = *t*₁ + *t*₂ + *t*₃ (formula 2). In the formula 2, t represents the adjusted time point, t₁ represents the unadjusted time point on the base timeline, t₂ represents the time zone offset, and t₃ represents the daylight saving time offset. For example, the time zone offset between the target time zone and the base time zone is 8 hours and the daylight saving time offset is 1 hour, according to the formula 2, 0:00 on the base timeline can be adjusted to 9:00, 1:00 can be adjusted to 10:00, 2:00 can be adjusted to 11:00, and so on. For the time points on the base timeline that are not in daylight saving time, the description can refer to the above and will not be repeated here.

It will be noted that in this embodiment, adjusting the time point on the base timeline may further include: recording a mapping relationship between an original time point on the base timeline and the adjusted time point. Thus, in response to determining that the target time zone is the client time zone, in the above step 301, the target time point can be directly converted to the base time point based on the mapping relationship. For example, the target time point selected on the target timeline is 9:00, and the mapping relationship is retrieved based on the target time point, i.e., 9:00, and another time point (0:00, which is the original time point of the base timeline) with the mapping relationship to the target time point, i.e., 9:00, is determined based on the retrieved mapping relationship, the another time point (0:00, which is the original time point of the base timeline) with the mapping relationship to 9:00 is directly determined as the corresponding base time point.

It will be noted that once the target time zone is adjusted, the target timeline is plotted again from step 402, so that the target timeline corresponds to the adjusted target time zone, the description is not repeated here and can be found in steps 402 to 403 above.

The above describes the plotting the target timeline in the process shown in FIG. 4.

By the process shown in FIG. 4, the target timeline including the daylight saving time is plotted, thus the application of the timeline is expanded.

In addition, embodiments of the present disclosure may further include displaying video information in the target video device corresponding to at least one time period on the target timeline.

Optionally, the target video device uses base time information in the base time zone to record the video recording time.

Based on this, in an example, when the target timeline is the base timeline, or, before adjusting the base timeline to obtain the target timeline, video information corresponding to the video recording time in the target video device and the base time point on the base timeline may be displayed directly at a designated location on the base timeline. The displayed video information will not change due to subsequent adjustment of time points on the base timeline. Based on this, the display of the video information corresponding to the video recording time in the target video device and the base time point on the base timeline is considered to achieve the display of the video information in the target video device corresponding to at least one time period on the target timeline.

In another example, after adjusting the base timeline to obtain the target timeline, the video recording time of the target video device is converted to the time under the target time zone corresponding to the target timeline, and the video recording information in the target video device corresponding to at least one time period in the target timeline is displayed at a designated location in the target timeline.

FIG. 6 shows, for example, that at a designated location on the target timeline (FIG. 6 shows the lower part of the target timeline as an example), the video device 13 has a recorded video between 1:00 and 5:00 on the corresponding target timeline, and video device 14 has a recorded video between 6:00 and 9:00 on the corresponding target timeline. Through this kind of processing, the user can intuitively see video information of each target video device through the target timeline.

It will be noted that this embodiment may further include displaying a collection of video information in all target video devices corresponding to at least one time period in the target timeline at a designated location on the target timeline, FIG. 6 shows, for example, a collection of video information in all target video devices corresponding to at least one time period in the target timeline at a lower location on the target timeline; and/or, this embodiment may further include displaying a collection of video information in all non-target video devices corresponding to at least one time period in the target timeline at a designated location in the target timeline (FIG. 6 shows the lower part of the target timeline as an example). And/or, this embodiment may further include displaying a collection of video information of all video devices (including target video devices selected by user and unselected non-target video devices) corresponding to at least one time period on the target timeline at a designated location on the target timeline (FIG. 6 shows the lower part of the target timeline as an example). In this way, the user can view and track the video information played back synchronously based on the displayed collection of video information.

The above describes the method provided by the above embodiments, the apparatus provided by the embodiments is described below.

Corresponding to the foregoing embodiments of the video playback method, the present disclosure also provides embodiments of the video playback apparatus.

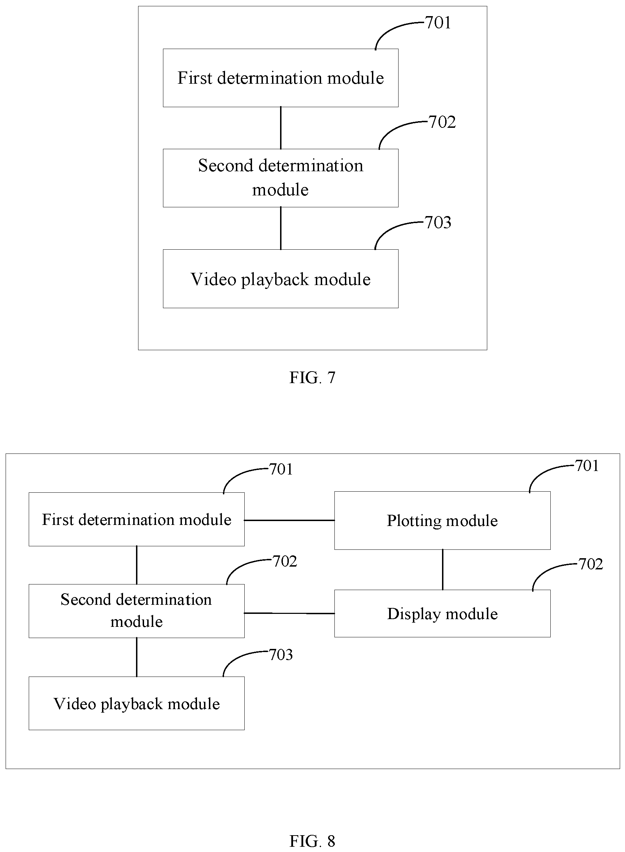

FIG. 7 is a block diagram illustrating a video playback apparatus according to an exemplary embodiment of the present disclosure, the apparatus corresponds to the video playback method shown in FIG. 2. As shown in FIG. 7, the apparatus may include: a first determination module 701, configured to determine a target time point for video playback to be performed and a video playback mode, where the video playback mode is a mode for video playback based on a target time zone, and the target time zone is a time zone corresponding to the target time point; a second determination module 702 , configured to determine, based on the target time zone and the target time point, a target playback time point for video playback for a target video device to perform video playback; and a video playback module 703, configured to play back a video in the target video device based on the target playback time point determined for the target video device.

In an embodiment, the target time zone is a client time zone in which the client is located; when a number of the target video devices to perform video playback is greater than 1, each target video device has a same target playback time point.

In an embodiment, the target time zone is a first time zone in which a designated video device is located; when a number of the target video devices to perform video playback is greater than 1, a target playback time point of each target video device corresponds to same time information in a respective time zone in which each target video device is located.

In an embodiment, the second determination module 702 is configured to, when determining, based on the target time zone and the target time point, a target playback time point for video playback for a target video device to perform video playback, convert the target time point in the target time zone to a base time point in a preset base time zone based on a first time difference, where the first time difference is determined based on a time zone offset between the target time zone and the base time zone, or, when the target time point is in daylight saving time of the target time zone, the first time difference is based on a time zone offset between the target time zone and the base time zone, and a daylight saving time offset; and determine a target playback time point for video playback for the target video device based on the base time point.

In an embodiment, in response to determining that the target time zone is a first time zone in which a designated video device is located, the second determination module 702 is configured to, when converting the target time point in the target time zone to a base time point in a preset base time zone based on the first time difference, determine a second time difference between the target time zone and the second time zone when the target time zone is different from a second time zone in which the target video device is located, where the second time difference is determined based on a time zone offset between the second time zone and the target time zone, or, when at least one of the target time point or a reference time point is in the daylight saving time, the second time difference is determined based on the daylight saving time offset and the time zone offset between the second time zone and the target time zone, and the reference time point is a time point within the second time zone corresponding to the target time point; and convert the target time point in the target time zone to the base time point in the preset base time zone based on the first time difference and the second time difference.

In an embodiment, the target time point is a time point selected on a plotted target timeline.

FIG. 8 is a block diagram illustrating a video playback apparatus according to another exemplary embodiment of the present disclosure, based on FIG. 7, optionally, the apparatus further includes a plotting module 704 and/or a display module 705.

The plotting module 704 is configured to: determine the target time zone corresponding to the target timeline; obtain time zone information for the target time zone, where the time zone information includes at least one of information on a start time at which the target time zone enters daylight saving time, information on an end time at which the daylight saving time ends, or a daylight saving time offset; and plot the target timeline corresponding to the target time zone, where when determining, based on the time zone information, that the target timeline includes a time point in the daylight saving time, the time point in the target timeline in the daylight saving time is adjusted to be a sum of the time point and the daylight saving time offset.

The display module 705 is configured to display video information in the target video device corresponding to at least one time period in the target timeline.

In an embodiment, the plotting module 704 is configured to: determine the target time zone corresponding to the target timeline; obtain time zone information for the target time zone, where the time zone information includes at least one of information on a start time at which the target time zone enters daylight saving time, information on an end time at which the daylight saving time ends, or a daylight saving time offset; plot a base timeline corresponding to a preset base time zone; and adjust the base timeline to obtain the target timeline corresponding to the target time zone .

In an embodiment, when determining, based on the time zone information, that the target time zone is not in the daylight saving time, adjusting the base timeline to obtain the target timeline corresponding to the target time zone includes: adjusting the time point on the base timeline to obtain the target timeline corresponding to the target time zone based on a time zone offset between the target time zone and the preset base time zone.

In an embodiment, when determining, based on the time zone information, that the target time zone is in the daylight saving time, adjusting the base timeline to obtain the target timeline corresponding to the target time zone includes: for time points on the base timeline that are in the daylight saving time, adjusting the time points on the base timeline that are in the daylight saving time based on a time zone offset between the target time zone and the base time zone, and a daylight saving time offset; and for time points on the base timeline that are not in daylight saving time, adjusting the time points on the base timeline that are not in the daylight saving time based on the time zone offset between the target time zone and the base time zone.

In an embodiment, after adjusting the base timeline to obtain the target timeline corresponding to the target time zone, the display module 705 is further configured to convert a video recording time of the target video device to time in the target time zone corresponding to the target timeline; and display video information in the target video device corresponding to at least one time period in the target timeline at a designated position in the target timeline.

The above describes the apparatus corresponding to the method shown in FIG. 2.

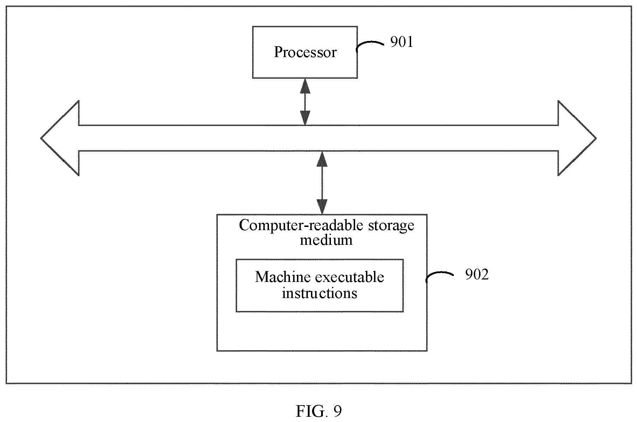

Referring to FIG. 9, the present disclosure further provides an electronic device including a processor 901 and a computer-readable storage medium 902. The computer-readable storage medium 902 is configured to store computer programs; the processor 901 is configured to, when executing the computer programs stored on the computer-readable storage medium 902, implement the steps of the video playback method provided by the embodiments of the present disclosure.

The present disclosure further provides a computer-readable storage medium storing computer programs, where the computer programs are executed by a processor to implement the steps of the video playback method provided by the embodiments of the present disclosure.

The present disclosure further provides a computer program stored on a computer-readable storage medium, where the computer programs are executed by a processor to implement the steps of the video playback method provided by the embodiments of the present disclosure.

For details about the implementation process of the functions and effects of the units in the above apparatus, reference can be made to the implementation process of the corresponding steps in the above method, details of which will not be repeated herein.

Since embodiments of the device substantially corresponds to embodiments of the method, relevant parts may be referred to the description of the embodiments of the method. The examples of apparatuses described above are merely illustrative and the units described as separate components may be or not be physically separated, and the components displayed as units may be or not be physical units, i.e., may be located in one place, or may be distributed to a plurality of network units. Some or all of these modules can be selected according to actual needs to achieve the objective of the solution of the present disclosure. It may be understood and implemented by those skilled in the art without creative work.

After considering the specification and practicing the present disclosure, a person skilled in the art would easily conceive of other implementations of this application. The disclosure is intended to cover any variations, uses, or adaptations of the present disclosure following general principles of the present disclosure and include the common general knowledge or common technical means in the art without departing from the present disclosure. The specification and examples are indicated by the appended claims.

It should also be noted that the terms "including", "including" or any other variation are intended to cover non-exclusive inclusion, so that a process, a method, a product or a device that includes a series of elements includes not only those elements, but also includes other elements that are not explicitly listed, or elements that are inherent to such process, method, product, or device. Without further limitation, elements defined by the statement "including a ......" do not preclude the existence of additional identical elements in the process, method, production or device including the elements.

The above description is only some examples of the present application, and is not intended to limit the present application. Any modifications, equivalent substitutions, improvements, etc., which are made within the spirit and principle of the present application, shall be included in the protection scope of the present application.

## Claims

1. A video playback method, applied to a client, and comprising:
determining a target time point for video playback to be performed and a video playback mode, wherein the video playback mode is a mode for video playback based on a target time zone, and the target time zone is a time zone corresponding to the target time point;
determining, based on the target time zone and the target time point, a target playback time point for video playback for a target video device to perform video playback; and
playing back a video in the target video device based on the target playback time point determined for the target video device.

2. The method of claim 1, wherein the target time zone is a client time zone in which the client is located; when a number of the target video device to perform video playback is greater than 1, each target video device has a same target playback time point.

3. The method of claim 1, wherein the target time zone is a first time zone in which a designated video device is located; when a number of the target video device to perform video playback is greater than 1, a target playback time point of each target video device corresponds to same time information in a respective time zone in which each target video device is located.

4. The method of claim 1, wherein determining, based on the target time zone and the target time point, a target playback time point for video playback for a target video device to perform video playback comprises:
converting the target time point in the target time zone to a base time point in a preset base time zone based on a first time difference, wherein the first time difference is determined based on a time zone offset between the target time zone and the base time zone, or, when the target time point is in daylight saving time of the target time zone, the first time difference is based on a time zone offset between the target time zone and the base time zone, and a daylight saving time offset; and
determining a target playback time point for video playback for the target video device based on the base time point.

5. The method of claim 4, wherein in response to determining that the target time zone is a first time zone in which a designated video device is located, converting the target time point in the target time zone to a base time point in a preset base time zone based on the first time difference comprises:
when the target time zone is different from a second time zone in which the target video device is located, determining a second time difference between the target time zone and the second time zone, wherein the second time difference is determined based on a time zone offset between the second time zone and the target time zone, or, when at least one of the target time point or a reference time point is in the daylight saving time, the second time difference is determined based on the daylight saving time offset and the time zone offset between the second time zone and the target time zone, and the reference time point is a time point within the second time zone corresponding to the target time point; and
converting the target time point in the target time zone to the base time point in the preset base time zone based on the first time difference and the second time difference.

6. The method of claim 1, wherein the target time point is a time point selected on a plotted target timeline; the method further comprising:
displaying video information in the target video device corresponding to at least one time period in the target timeline.

7. The method of claim 1, wherein the target time point is a time point selected on a plotted target timeline; the target timeline is plotted by:
determining the target time zone corresponding to the target timeline;
obtaining time zone information for the target time zone, wherein the time zone information includes at least one of information on a start time at which the target time zone enters daylight saving time, information on an end time at which the daylight saving time ends, or a daylight saving time offset; and
plotting the target timeline corresponding to the target time zone, wherein when determining, based on the time zone information, that the target timeline comprises a time point in the daylight saving time, the time point in the target timeline in the daylight saving time is adjusted to be a sum of the time point and the daylight saving time offset.

8. The method of claim 1, wherein the target time point is a time point selected on a plotted target timeline; the target timeline is plotted by:
determining the target time zone corresponding to the target timeline;
obtaining time zone information for the target time zone, wherein the time zone information includes at least one of information on a start time at which the target time zone enters daylight saving time, information on an end time at which the daylight saving time ends, or a daylight saving time offset;
plotting a base timeline corresponding to a preset base time zone; and
adjusting the base timeline to obtain the target timeline corresponding to the target time zone.

9. The method of claim 8, wherein when determining, based on the time zone information, that the target time zone is not in the daylight saving time, adjusting the base timeline to obtain the target timeline corresponding to the target time zone comprises:
adjusting the time point on the base timeline to obtain the target timeline corresponding to the target time zone based on a time zone offset between the target time zone and the preset base time zone.

10. The method according to claim 8, wherein when determining, based on the time zone information, that the target time zone is in the daylight saving time, adjusting the base timeline to obtain the target timeline corresponding to the target time zone comprises:
for time points on the base timeline that are in the daylight saving time, adjusting the time points on the base timeline that are in the daylight saving time based on a time zone offset between the target time zone and the base time zone, and a daylight saving time offset; and
for time points on the base timeline that are not in daylight saving time, adjusting the time points on the base timeline that are not in the daylight saving time based on the time zone offset between the target time zone and the base time zone.

11. The method of claim 8, further comprising:
after adjusting the base timeline to obtain the target timeline corresponding to the target time zone, converting a video recording time of the target video device to time in the target time zone corresponding to the target timeline; and
displaying video information in the target video device corresponding to at least one time period in the target timeline at a designated position in the target timeline.

12. A video playback apparatus, applied to a client, and comprising:
a first determination module, configured to determine a target time point for video playback to be performed and a video playback mode, wherein the video playback mode is a mode for video playback based on a target time zone, and the target time zone is a time zone corresponding to the target time point;
a second determination module, configured to determine, based on the target time zone and the target time point, a target playback time point for video playback for a target video device to perform video playback; and
a video playback module, configured to play back a video in the target video device based on the target playback time point determined for the target video device.

13. An electronic device, comprising a readable storage medium and a processor, wherein the readable storage medium is configured to store machine executable instructions, and the processor is configured to read the machine executable instructions stored in the readable storage medium, and execute the machine executable instructions to implement the method according to any one of claims 1-11.

14. A computer-readable storage medium storing computer programs, wherein the computer programs are executed by a processor to implement the method according to any one of claims 1-11.

15. A computer program stored on a computer-readable storage medium, when a processor executes the computer program, causing the processor to implement the method according to any one of claims 1-11.
